# FASCICULE DE BREVET EUROPEEN

(11) **EP 2 231 464 B1**
(45) Date de publication et mention de la délivrance du brevet: **17.10.2012**
(21) Numéro de dépôt: 08864222.8
(22) Date de dépôt: 08.12.2008
(51) Int. Cl.: B62D 33/02, B62D 21/02, B62D 21/20, B60P 1/64, B60P 7/13

(54) **VEHICULE PORTE-CONTENEURS**
CONTAINERTRANSPORTFAHRZEUG
CONTAINER-CARRYING VEHICLE

(30) Priorité: 12.12.2007 FR 0759762
(43) Date de publication de la demande: 29.09.2010
(73) Titulaire: Gaussin, Christophe, 1093 La Conversion (CH)
(72) Inventeur: Gaussin, Christophe, 1093 La Conversion (CH)
(74) Mandataire: Rhein, Alain
(86) Numéro de dépôt international: PCT/FR2008/052243
(87) Numéro de publication internationale: WO 2009/080970

(56) Documents cités:
- AU-B2- 716 147
- GB-A- 2 255 054
- JP-A- 2007 118 928
- US-B1- 6 309 153

## Description

L'invention concerne un véhicule porte-conteneurs comportant des moyens de roulement, un châssis comportant une surface d'appui pour la réception d'un ou plusieurs conteneurs, et des moyens de positionnement du ou desdits conteneurs comportant des butées de centrage transversal et des butées longitudinales.

La présente invention entre dans le domaine de la manutention de conteneurs, au niveau d'installations portuaires, aéroportuaires, ferroviaires, routières ou mixtes.

L'invention concerne plus particulièrement un véhicule, sous la forme d'un automoteur, ou d'une remorque apte à être attelée à un véhicule tracteur, ce véhicule étant conçu apte à recevoir un ou plusieurs conteneurs de type maritime standardisé, servis par des moyens de chargement tel que palonniers de grue ou de pont appelés spreaders, ou encore par des engins de levage tels que chariots élévateurs, ou engins spéciaux portuaires.

L'immobilisation d'un navire au quai est très coûteuse, et tout est mis en oeuvre, dans les grands ports, pour réduire au minimum les opérations de déchargement et de chargement.

Le déchargement des navires s'effectue avec des grues, qui ont maintenant des palonniers mouflés, dit spreaders, capables de prendre plusieurs conteneurs à la fois, soit alignés, soit en parallèle, soit encore en plusieurs rangées de conteneurs alignés.

Faute de moyens de réception adaptés, ces spreaders déposent en général les conteneurs au sol. Les conteneurs sont repris par des grues ou par des spreaders pour deux conteneurs alignés selon leur longueur, pour être redéposés sur une remorque classique conçue pour un conteneur de 40 pieds, ou pour deux conteneurs de 20 pieds.

Les conteneurs sont généralement saisis dans leur partie supérieure par les engins de manutention, et déposés, le plus rapidement possible, sur les moyens de réception constitués par des remorques tractées, des wagons, ou encore des automoteurs, qui les transporteront sur leur lieu d'utilisation ultérieur.

La manutention sur les ports se fait généralement par trains de remorques. La dépose de chaque conteneur, ou de chaque groupe de conteneurs, doit donc être la plus rapide possible. Dans un but de productivité, il n'est pas rare qu'un manutentionnaire, après avoir effectué son approche de positionnement, vienne à lâcher un conteneur avant que celui-ci ne repose entièrement sur son moyen de réception. Un tel largage peut être fait, par exemple, à 20 centimètres au-dessus de la zone de réception. La manoeuvre étant très rapide, il se peut tout aussi bien, à l'inverse, que la dépose se fasse avec une poussée descendante verticale, ou même oblique, sous l'effet du poids et de l'inertie de l'engin de manutention. En particulier, il convient de considérer le cas où la masse du spreader vient, momentanément, s'ajouter à celle du ou des conteneurs qu'il dépose. On comprend que les véhicules, notamment remorques, portuaires souffrent beaucoup de tels traitements, qui abrègent leur durée de vie.

On connaît, par la demande de brevet FR 07 56916 déposée et non encore publiée du même déposant, un véhicule renforcé pour résister à des contraintes de service difficiles.

Le document US 6 309 153 décrit un porte-conteneurs conforme au préambule de la revendication 1, à structure en cadre fermé, lourde et coûteuse. Le document JP2007 118928 décrit une remorque à châssis en échelle sur lequel sont rapportées des traverses pour l'emport de conteneurs, d'un dimensionnement très supérieur à celui du châssis et élevant le niveau d'appui des conteneurs par rapport au sol.

L'invention a pour but de pallier les inconvénients de l'état de la technique en proposant un véhicule, notamment une remorque, conçu et calculé pour supporter les impulsions consécutives aux manoeuvres brutales du manutentionnaire, aussi bien lors de chocs frontaux que lors de chocs verticaux, tout en assurant un bon positionnement et un bon centrage de chaque charge. De façon préférée, le véhicule selon l'invention est conçu de façon à recevoir plusieurs conteneurs.

A cet effet, l'invention concerne un véhicule porte-conteneurs tel que décrit par la revendication 1.

Selon une caractéristique de l'invention, ledit bras est prolongé par deux traverses montées symétriquement par rapport à un plan de symétrie que comporte ledit bras et orthogonal à une longeron sur laquelle ce dernier est fixé.

Selon une caractéristique de l'invention, ledit bras est prolongé par une traverse centrale à profil en I dont le plan de symétrie est confondu avec un plan de symétrie que comporte ledit bras et orthogonal au longeron sur lequel ce dernier est fixé, et par deux traverses latérales montées symétriquement par rapport à ladite traverse centrale au profil en I.

Selon une caractéristique de l'invention, ledit guide comporte une face pentue conçue apte à guider et à centrer une charge, notamment un conteneur, déposée sur ledit véhicule, ladite face pentue comportant à sa partie supérieure une zone rayonnée ou/et un plat.

Le véhicule selon l'invention est conçu dans une optique d'économie, à la fois dans sa réalisation faisant appel à une standardisation de composants poussée au maximum, que dans son exploitation, ledit véhicule étant également conçu le plus léger possible pour économiser l'énergie de traction et de freinage.

Par rapport à l'art antérieur, le véhicule selon l'invention se distingue par une flèche très réduite en charge, par rapport à sa longueur.

De façon préférée, le véhicule selon l'invention est réalisé sous forme twin, c'est-à-dire pour l'emport de deux conteneurs alignés dans le sens de leur longueur.

Le véhicule selon l'invention est polyvalent pour permettre l'emport de conteneurs de dimensions différentes, notamment 20, 40 ou 45 pieds.

L'utilisation de ce véhicule selon l'invention permet de combiner le chargement par chariots élévateurs, c'est-à-dire latéralement ou par le dessus, ou/et par spreaders, et dans ce cas uniquement par le dessus.

La conception du véhicule selon l'invention impose une valeur limite de flèche lors des opérations de chargement, notamment par spreader.

D'autres caractéristiques et avantages de l'invention ressortiront de la description détaillée qui va suivre des modes de réalisation non limitatifs de l'invention, en référence aux figures annexées dans lesquelles :
- la figure 1 représente de façon schématisée et en perspective vue de dessus, un véhicule selon l'invention, sous la forme d'une remorque dans un premier mode de réalisation;
- la figure 2 représente de façon schématisée, partielle et en perspective vue de dessus, une troisième variante de réalisation de traverses de renfort du châssis au droit des butées de centrage transversal;
- la figure 3 représente de façon schématisée, partielle et en coupe transversalement à l'axe longitudinal du châssis, un guide d'une butée de centrage transversal.

L'invention concerne un véhicule 1 porte-conteneurs.

L'invention concerne le domaine de la manutention de conteneurs, au niveau d'installations portuaires, aéroportuaires, ferroviaires, routières ou mixtes.

Des modes de réalisation préférés de l'invention sont illustrés sur les figures.

Le véhicule 1 comporte des moyens de roulement 2. Classiquement ceux-ci sont constitués d'au moins un essieu 22 équipé de roues

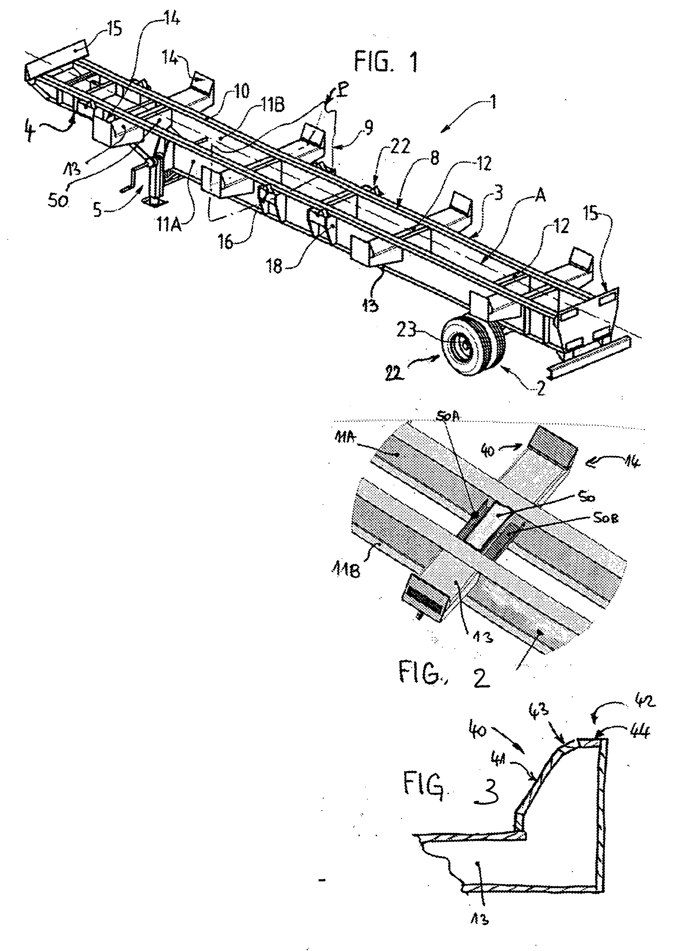

Dans une application préférée, le véhicule 1 est conçu sous la forme d'une remorque 3, tel que visible sur la figure 1. Cette remorque 3 est destinée à être attelée à un véhicule tracteur, par l'intermédiaire de moyens d'attelage 4. Ces derniers peuvent consister en un bossage conçu apte à coopérer avec la sellette d'un véhicule tracteur motorisé, ou en un timon ou crochet conçu apte à coopérer avec une autre remorque, au sein d'un train de remorques. Le véhicule 1 selon l'invention peut, avantageusement, être équipé de moyens d'attelage 4 à chacune de ses extrémités, de façon à pouvoir être intégré dans un train de véhicules.

La remorque 3 comporte encore, de préférence, dans un mode de réalisation préféré tel que visible sur la figure 1 où les moyens de roulement 2 sont regroupés à une extrémité de la remorque 3, des moyens d'appui au sol 5 à l'autre extrémité, notamment sous la forme d'une ou plusieurs béquilles. Ces moyens d'appui au sol 4 peuvent être rétractables, notamment verticalement, ou/et en rotation pour leur repliement sous la remorque 3.

Dans une autre réalisation le véhicule 1 est un automoteur, et comporte alors des moyens d'entraînement. Dans un mode de réalisation où l'automoteur est piloté par un conducteur, il comporte une cabine de conduite. On notera qu'un tel automoteur peut aussi être automatisé ou télécommandé.

Le véhicule 1 selon l'invention, notamment porte-conteneurs, comporte des moyens de roulement 2, un châssis 10 comportant une surface d'appui 8 pour la réception d'un ou plusieurs conteneurs, ledit châssis 10 étant une structure centrale en échelle comportant au moins deux longerons longitudinaux 11A, 11B, sensiblement parallèles et des traverses 12, et des moyens de positionnement 9 du ou desdits conteneurs comportant des butées de centrage transversal 14 et des butées longitudinales.

Selon l'invention, ces butées de centrage transversal 14 sont disposées de part et d'autre d'un axe longitudinal A dudit châssis 10 sur des bras 13 montés en débord par rapport à ladite structure centrale en échelle et comportent chacune un guide 40, ledit bras 13 étant fixé à l'un au moins desdits longerons 11A, 11B, et ledit bras 13 étant encore prolongé dans son alignement, entre lesdits longerons 11A, 11B, par au moins une traverse de renfort 50 joignant ces derniers.

Le véhicule 1 est conçu pour recevoir une charge utile constituée par un ou plusieurs conteneurs au niveau d'une surface d'appui 8. Le positionnement des conteneurs est assuré par des moyens de positionnement 9. Dans une application préférée, cette surface d'appui 8 est plane.

Le véhicule 1 comporte un châssis 10, dont une surface supérieure définit la surface d'appui 8 des conteneurs.

Les moyens de positionnement 9 du ou des conteneurs comportent des butées de centrage transversal 14 et des butées longitudinales.

Le châssis 10 comporte des bras 13 munis de faces pentues 41 constituant des butées de centrage transversal 14, sous forme d'un vé, des conteneurs sur la surface d'appui 8. Ces bras 13 sont espacés l'un de l'autre. Chaque bras 13 est fixé à l'un au moins des longerons 11A, 11B du châssis 10. Ce bras 13 est encore prolongé dans son alignement, entre les longerons 11A, 11B, par au moins une traverse de renfort 50 joignant ces derniers.

Dans une variante d'exécution, tel que visible sur la figure 2, le bras 13 est prolongé par une traverse centrale 50 à profil en I dont le plan de symétrie est confondu avec ce plan de symétrie P, encadrée par deux traverses latérales 50A, 50B montées symétriquement par rapport à cette traverse centrale 50 au profil en I.

Les traverses de renfort, selon les exécutions, peuvent prendre différents profils : en C, en I tel que visible sur les figures 3 et 4, en L tel que visible sur la figure 4.

Les bras 13 peuvent être réalisés en structures caissonnées, dans ce cas, de préférence leur profil est fermé et rectangulaire, et les faces sont de même épaisseur. Les traverses de renfort 50 peuvent encore être également réalisées sous forme caissonnée, avec des faces de même épaisseur dans une réalisation préférentielle dans ce cas.

De façon préférée la traverse de renfort 50 a un plan de symétrie confondu avec un plan de symétrie P que comporte ledit bras 13 et orthogonal à un longeron 11A, 11B sur lequel ce dernier est fixé.

Le guide 40 comporte, tel que visible sur la figure 3, une face pentue 41 conçue apte à guider et à centrer une charge, notamment un conteneur, déposée sur ledit véhicule 1, ladite face pentue 41 comportant à sa partie supérieure 42 une zone rayonnée 43 ou/et un plat 44

Selon l'invention, les butées longitudinales, utilisées pour le positionnement et le maintien des conteneurs, sont composées d'une part par au moins une butée longitudinale fixe 15, et d'autre part par au moins une butée longitudinale escamotable 16.

La conception des bras 13, et des butées 14, 15 et 16, est faite pour une répartition optimale des appuis sur la structure tôlée qui est, de préférence, celle du châssis 10.

Traditionnellement les conteneurs maritimes sont équipés de ferrures qui sont saillantes sous leur face inférieure. Ces ferrures, appelées pièces de coin pour celles dédiées à l'empilage des conteneurs, et bossages pour celles utilisées pour les moyens de fermeture du conteneur, sont toujours gênantes pour les éléments de guidage et les butées qui équipent les véhicules de transport, et il est fréquent de voir l'endommagement, soit des véhicules, soit des conteneurs, soit des deux.

A cet effet, l'espacement longitudinal et transversal des butées 14, 15, 16, et des bras 13 est calculé de façon à ce que ces ferrures de conteneurs soient face à une zone vide du véhicule 1, sans possibilité d'interférence avec un des bras 13 ou encore une butée escamotable 16.

Les bras 13 sont donc disposés longitudinalement, selon l'axe A longitudinal du châssis 10, par rapport aux butées longitudinales fixes 15, à des distances calculées pour éviter toute interférence entre d'une part les ferrures de conteneurs standard de différents formats positionnés en appui sur lesdites butées longitudinales 15, et d'autre part lesdits bras 13.

Les butées escamotables 16 sont, quant à elles, disposées transversalement, à une distance de l'axe longitudinal A qui est calculée pour ne pas interférer avec des ferrures de conteneurs standard, dont les positions et espacements sont également standardisés, en appui sur les butées de centrage transversal 14.

C'est pourquoi, dans une application préférée et tel que visible sur la figure 1, les bras 13 sont en débord du châssis 10. La cote du débord des butées par rapport au châssis 10 est calculée pour autoriser le passage sans heurt des conteneurs.

Dans une réalisation préférée représentée sur la figure 1, le véhicule 1 est conçu apte à recevoir un ou deux conteneurs, et notamment soit un conteneur de 40 pieds, soit un conteneur de 45 pieds, soit deux conteneurs de 20 pieds alignés.

La conception particulière du châssis 10 selon l'invention permet d'assurer la limitation, à une valeur donnée, de sa flèche lors des opérations de chargement, notamment par spreader, ainsi qu'en statique.

A cet effet, dans une optique de rigidité et de maîtrise du coût de construction, le châssis 10 comporte une structure centrale en échelle, construite autour d'au moins deux longerons 11 parallèles longitudinaux, 11A et 11B. La conception de ces longerons 11, et du châssis 10, est optimisée dans une optique d'économie de matières premières, à la fois dans la limitation au minimum des variétés et des épaisseurs de tôles utilisées, et aussi dans le réemploi des chutes de découpe dans les plus petits sous-ensembles. Dans une application préférée, la structure du châssis 10, des bras 13 et des traverses 50, est en acier soudable.

Cette conception privilégie les soudures en long, plus faciles à robotiser. Le coût de la soudure est alors particulièrement bas. Chaque longeron 11 adopte de préférence un profil spécial de forme voisine d'un I. Le profil choisi pour le longeron 11 diffère des profils du commerce, en ce que ses ailes sont volontairement plus fines, en proportion, que celles des profilés normalisés. Le calcul de dimensionnement, en particulier de la hauteur du profil, c'est-à-dire de la partie centrale du I, est exécuté de façon à utiliser la même épaisseur de tôle pour l'âme que pour les ailes. Dans une application préférée, cette épaisseur est judicieusement choisie de manière à optimiser, par sa réduction, le poids de l'ensemble, et à simplifier les approvisionnements en matière.

La conception des longerons 11A et11B est importante car ils déterminent, ensemble, environ 50% du poids du véhicule 1.

Les longerons 11 sont joints, pour former la structure en échelle du châssis 10, par des traverses transversales 12, dont les épaisseurs de tôles sont calculées selon le même principe que pour les longerons 11.

Dans une exécution préférée, ces traverses 12 sont caissonnées, et en particulier avec un profil fermé rectangulaire. De façon préférée, toutes les faces sont de même épaisseur.

Une telle structure en caisson procure une bonne rigidité. Elle offre en outre l'avantage de permettre une économie de traitement de surface, en particulier de peinture.

Une autre exécution avantageuse consiste en une réalisation de traverses 12 au profil en I comme les longerons.

La conception du châssis 10 est ainsi particulièrement rigide. Ceci garantit une faible flèche sous l'effort, ce qui est particulièrement important si, par exemple deux conteneurs de 20 pieds doivent être transportés côte à côte. En effet, ces deux conteneurs ne doivent pas former d'angle entre eux, ce qui rendrait impossible une reprise de l'ensemble des deux conteneurs, en une seule opération, par un moyen de manutention tel qu'un spreader.

Si nécessaire, le châssis 10 peut encore, si le véhicule 1 est conçu pour des charges particulièrement élevées, être obturé par une ou plusieurs tôles joignant les longerons 11 pour former un caisson en U, ou encore un caisson fermé.

Dans l'application préférée où le véhicule 1 est une remorque 3, et dans le mode de réalisation tel que visible sur la figure 1, la zone d'attelage de la remorque 3, en partie avant, des moyens d'attelage 4 sur une sellette d'un véhicule tracteur, comporte, au niveau du châssis 10, un carénage inférieur de protection pour la manoeuvre d'accostage, qui apporte une haute rigidité à cette zone très sollicitée en contraintes. De préférence, la hauteur de la sellette par rapport au sol correspond au standard portuaire de 1250 mm.

L'ensemble de ces principes de conception permet d'obtenir, par rapport à des véhicules traditionnels construits en profilés standard du commerce, pour la même capacité d'emport, un gain de poids d'environ 40%, ce qui est considérable, et autorise une importante économie de carburant.

Dans l'application préférée où le véhicule 1 est une remorque 3, et dans le premier mode de réalisation tel que visible sur les figures 1 et 2, ses moyens de roulement 2 sont constitués par un essieu unique porteur 23, dimensionné pour accepter la moitié de la charge maximale, l'autre moitié étant reprise par la sellette du véhicule tracteur. La configuration mono-essieu présente l'avantage d'éviter tout ripage, et, partant, toute dégradation du sol ou/et des pneumatiques, et, également de prévenir tout vrillage du châssis 10. L'économie constituée par la présence d'un essieu unique porteur 23 est, encore, particulièrement appréciable. De façon préférée, cet essieu porteur 23 est de section carrée, son logement sous le châssis 10 est renforcé par des tôles soudées obliquement et constituant un vé.

On a vu que les vitesses verticales de déchargement pouvaient être très élevées. Afin de pallier les inconvénients qui en découlent sur la structure, et notamment l'usure par fatigue, le véhicule 1 selon l'invention est avantageusement équipé d'au moins un dispositif amortisseur d'impact. Ce dispositif amortisseur peut équiper aussi bien les bras 13 de réception des conteneurs, que les moyens de roulement 2, notamment l'essieu porteur 23. Il est naturellement possible de combiner des dispositifs amortisseurs à la fois sur les bras 13 et sur l'essieu porteur 23.

Pour équiper l'essieu porteur 23, notamment sous forme d'un essieu amortisseur complet, qui peut avantageusement être vendu indépendamment pour équiper des véhicules existants, il est possible de choisir des dispositifs de type anti-vibratoire tels qu'utilisés pour des machines-outils ou des machines tournantes, ou encore des butées à amortisseur de type ferroviaire, que l'on interpose alors entre la structure porteuse de l'essieu 23 ou du bras 13 d'une part, et le châssis 10 d'autre part. Les technologies à base de caoutchouc présentent une bonne résistance, à un coût acceptable.

Le véhicule 1 selon l'invention permet le chargement et le déchargement aisés par un spreader de deux conteneurs alignés. Il permet aussi la reprise de conteneurs vides par des chariots élévateurs, de façon latérale. L'espacement des bras 13 et leur positionnement relatif adéquat par rapport aux guides standardisés de passage de fourches pour les conteneurs maritimes autorisent l'accès d'un élévateur au plus près de la structure centrale en échelle du châssis 10, et donc une préhension dans les meilleures conditions.

Le véhicule selon l'invention incorpore avantageusement les caractéristiques des demandes de brevet du même déposant FR 07 56916, et FR 07 56919.

Le véhicule 1 est léger et son coût de réalisation est particulièrement économique, malgré son dimensionnement conçu pour résister à des conditions d'utilisation très dures.

## Revendications

1. Véhicule porte-conteneurs (1) comportant des moyens de roulement (2), un châssis (10) comportant une surface d'appui (8) pour la réception d'un ou plusieurs conteneurs, ledit châssis (10) étant une structure centrale en échelle comportant au moins deux longerons longitudinaux (11A, 11B) sensiblement parallèles et des traverses (12), et des moyens de positionnement (9) du ou desdits conteneurs comportant des butées de centrage transversal (14) et des butées longitudinales, lesdites butées de centrage transversal (14) sont disposées de part et d'autre d'un axe longitudinal (A) dudit châssis (10) sur des bras (13) montés en débord par rapport à ladite structure centrale en échelle et comportent chacune un guide (40), ledit bras (13) étant fixé à l'un au moins desdits longerons (11A, 11B), et ledit bras (13) étant encore prolongé dans son alignement entre lesdits longerons (11A, 11B), d'une part, par au moins une traverse de renfort centrale (50) joignant ces derniers et dont le plan de symétrie est confondu avec un plan de symétrie (P) que comporte ledit bras (13) et orthogonal au longeron (11A, 11B) sur lequel ce dernier est fixé, et **caractérisé par le fait que**, ledit bras étant prolongé, d'autre part, par deux traverses latérales (50A, 50B) entre lesdits longerons montées symétriquement par rapport à ladite traverse de renfort centrale (50).

2. Véhicule (1) selon la revendication 1, **caractérisé par le fait que** ladite traverse de renfort (50) a un profil en C.

3. Véhicule (1) selon la revendication 1, **caractérisé par le fait que** ladite traverse de renfort (50) a un profil en I.

4. Véhicule (1) selon la revendication 1, **caractérisé par le fait que** ladite traverse de renfort (50) a un profil en L.

5. Véhicule (1) selon la revendication 1, **caractérisé par le fait que** ladite traverse de renfort (50) a une structure en caisson fermé.

6. Véhicule (1) selon l'une des revendications précédentes, **caractérisé par le fait que** ladite traverse de renfort (50) a un plan de symétrie confondu avec un plan de symétrie (P) que comporte ledit bras (13) et orthogonal à un longeron (11A, 11B) sur lequel ce dernier est fixé.

7. Véhicule (1) selon l'une des revendications précédentes, **caractérisé par le fait que** ledit guide (40) comporte une face pentue (41) conçue apte à guider et à centrer une charge, notamment un conteneur, déposée sur ledit véhicule (1), ladite face pentue (41) comportant à sa partie supérieure (42) une zone rayonnée (43) ou/et un plat (44).

8. Véhicule porte-conteneurs (1) selon l'une quelconque des revendications précédentes, **caractérisé par le fait que** lesdits bras (13) ont un profil caissonné fermé de section rectangulaire et dont toutes les faces sont de même épaisseur.

9. Véhicule porte-conteneurs (1) selon l'une des revendications précédentes, **caractérisé par le fait que** ledit véhicule (1) est un automoteur et comporte des moyens d'entraînement.

10. Véhicule porte-conteneurs (1) selon l'une des revendications 1 à 9, **caractérisé par le fait que** ledit véhicule (1) est une remorque (3) comportant des moyens d'attelage (4) implantés à au moins une extrémité dudit châssis (10) renforcée par un carénage.

11. Véhicule porte-conteneurs (1) selon la revendication précédente, **caractérisé par le fait que** ses moyens de roulement (2) sont constitués par un essieu unique porteur (23) conçu apte à incorporer un dispositif amortisseur d'impact.

12. Véhicule porte-conteneurs (1) selon l'une des revendications précédentes, **caractérisé par le fait que** lesdits bras (13) incorporent un dispositif amortisseur d'impact.

## Claims

1. Container-carrying vehicle (1) including rolling means (2), a chassis (10) including a bearing surface (8) for receiving one or several containers, said chassis (10) being a central ladder structure including at least two substantially parallel longitudinal side rails (11A, 11B) and cross-members (12), and means for positioning (9) said container or containers including transverse centring stops (14) and longitudinal stops, said transverse centring stops (14) being arranged on both sides of a longitudinal axis (A) of said chassis (10) on arms (13) mounted so as to protrude with respect to said central ladder structure and each including a guide (40), said arm (13) being fixed to at least one of said side rails (11A, 11B), and said arm (13) also being extended in its alignment between said rails (11A, 11B), on the one hand, by at least one central reinforcing cross-member (50) connecting the latter and the symmetry plane of which coincides with a symmetry plane (P) said arm (13) includes and wherein said arm is extended, on the other hand, by two side cross-members (50A, 50B) between said rails mounted symmetrically to said central reinforcing cross-member (50).

2. Vehicle (1) according to claim 1, wherein said reinforcing cross-members (50) has a C-shaped profile.

3. Vehicle (1) according to claim 1, wherein said reinforcing cross-member (50) has a I-shaped profile.

4. Vehicle (1) according to claim 1 or 2, wherein said reinforcing cross-member (50) has a L-shaped profile.

5. Vehicle (1) according to claim 1, wherein said reinforcing cross-member (50) has a closed box-shaped structure.

6. Vehicle (1) according to one of the preceding claims, wherein said reinforcing cross-member (50) has a symmetry plane coinciding with a symmetry plane (P) said arm (13) includes and orthogonal to a side rail (11A, 11B) to which the latter is fixed.

7. Vehicle (1) according to one of the preceding claims, wherein said guide (40) includes a sloping face (41) designed capable of guiding and centring a load, namely a container placed on said vehicle (1), said sloping face (41) including at its upper portion (42) a curved area (43) or/and a flat area (44).

8. Container-carrying vehicle (1) according to any of the preceding claims, wherein said arms (13) have a closed box-shape profile with a rectangular cross-section and all the faces of which have the same thickness.

9. Container-carrying vehicle (1) according to one of the preceding claims, wherein said vehicle (1) is a motor vehicle and includes driving means.

10. Container-carrying vehicle (1) according to one of claims 1 to 9, wherein said vehicle (1) is a trailer (3) including coupling means (4) installed at least at one end of said chassis (10) reinforced by a shroud.

11. Container-carrying vehicle (1) according to the preceding claim, wherein its rolling means (2) are formed by one single bearing axle (23) designed capable of incorporating a shock-breaking device.

12. Container-carrying vehicle (1) according to one of the preceding claims, wherein said arms (13) incorporate a shock-breaking device.

## Patentansprüche

1. Containertransportfahrzeug (1), umfassend Rollmittel (2), ein Fahrgestell (10), das eine Auflagefläche (8) für die Aufnahme von einem oder von mehreren Containern umfasst, wobei das besagte Fahrgestell (10) ein mittig angeordnetes leiterförmiges Gerüst ist, das zumindest zwei merklich parallele seitliche Längsträger (11A, 11B) und Querträger (12) und Mittel zum Positionieren (9) des oder der besagten Container umfasst, die Anschläge zum transversalen Zentrieren (14) und Längsanschläge umfassen, wobei die besagten Anschläge zum transversalen Zentrieren (14) beiderseits von einer Längsachse (A) des besagten Fahrgestells (10) an Armen (13) angeordnet sind, die hervorstehend hinsichtlich des besagten mittig angeordneten leiterförmiges Gerüst montiert sind und jeweils eine Führung (40) umfassen, wobei der besagte Arm (13) an zumindest einem von den besagten Längsträgern (11A, 11B) befestigt sei, und wobei der besagte Arm (13) weiterhin in seiner Ausrichtung zwischen den besagten Längsträgern (11A, 11B), einerseits, durch zumindest einen mittig angeordneten Verstärkungsquerträger (50) verlängert sei, der diese Letzteren verbindet, und dessen Symmetrieebene mit einer Symmetrieebene (P), die der besagte Arm (13) umfasst, übereinstimmt und rechtwinklig zu dem Längsträger (11A, 11B) verläuft, an welchem dieser letztere befestigt ist, und **dadurch gekennzeichnet, dass**, andererseits, der besagte Arm durch zwei seitliche Querträger (50A, 50B) zwischen den besagten Längsträgern verlängert sei, die symmetrisch hinsichtlich des besagten mittig angeordneten Verstärkungsquerträgers (50) montiert sind.

2. Fahrzeug (1) nach Anspruch 1, **dadurch gekennzeichnet, dass** der besagte Verstärkungsquerträger (50) ein C-förmiges Profil aufweist.

3. Fahrzeug (1) nach Anspruch 1, **dadurch gekennzeichnet, dass** der besagte Verstärkungsquerträger (50) ein I-förmiges Profil aufweist.

4. Fahrzeug (1) nach Anspruch 1, **dadurch gekennzeichnet, dass** der besagte Verstärkungsquerträger (50) ein L-förmiges Profil aufweist.

5. Fahrzeug (1) nach Anspruch 1, **dadurch gekennzeichnet, dass** der besagte Verstärkungsquerträger (50) eine Struktur eines geschlossenen Kastens aufweist.

6. Fahrzeug (1) nach einem der vorgehenden Ansprüche, **dadurch gekennzeichnet, dass** der besagte Verstärkungsquerträger (50) eine Symmetrieebene aufweist, die mit einer Symmetrieebene (F), die der besagte Arm (13) umfasst, übereinstimmt und rechtwinklig zu einem Längsträger (11A, 11B) verläuft, an welchem dieser letztere befestigt ist.

7. Fahrzeug (1) nach einem der vorgehenden Ansprüche, **dadurch gekennzeichnet, dass** die besagte Führung (40) eine abschüssige Fläche (41) umfasst, die geeignet vorgesehen ist, um eine Ladung, insbesondere einen Container, der auf das besagten Fahrzeug (1) gehievt ist, zu lenken und zu zentrieren, wobei die besagte abschüssige Fläche (41) in ihrem oberen Teil (42) einen gebeugten Bereich (43) und/oder eine Flachstelle (44) umfasst.

8. Containertransportfahrzeug (1) nach irgendeinem der vorgehenden Ansprüche, **dadurch gekennzeichnet, dass** die besagten Arme (13) ein Profil eines geschlossenen Kastens mit rechteckigem Querschnitt aufweisen, dessen alle Seiten gleicher Dicke sind.

9. Containertransportfahrzeug (1) nach irgendeinem der vorgehenden Ansprüche, **dadurch gekennzeichnet, dass** das besagte Fahrzeug (1) ein Selbstfahrer ist und Antriebsmittel umfasst.

10. Containertransportfahrzeug (1) nach einem der Ansprüche 1 bis 9, **dadurch gekennzeichnet, dass** das besagte Fahrzeug (1) ein Sattelanhänger (3) ist, der Sattelkupplungsmittel (4) umfasst, die zumindest in einem Endbereich des besagten Fahrgestells (10), der durch eine Verschalung verstärkt ist, eingesetzt sind.

11. Containertransportfahrzeug (1) nach dem vorgehenden Anspruch, **dadurch gekennzeichnet, dass** seine Rollmittel (2) durch eine einzige Tragachse (23) gebildet sind, geeignet vorgesehen, um eine Aufprallstoßdämpfervorrichtung zu umfassen.

12. Containertransportfahrzeug (1) nach einem der vorgehenden Ansprüche, **dadurch gekennzeichnet, dass** die besagten Arme (13) eine Aufprallstoßdämpfervorrichtung umfassen.
